# EUROPEAN PATENT APPLICATION

(11) **EP 4 455 982 A1**
(43) Date of publication of application: **30.10.2024**
(21) Application number: 24172668.6
(22) Date of filing: 26.04.2024
(51) Int. Cl.: G06Q 50/34, G06Q 20/36, G07F 17/32

(54) **SYSTEM AND METHOD FOR SECURE TRANSFER OF DIGITAL CURRENCIES**

(30) Priority: 27.04.2023 US 202363498693 P
(71) Applicant: Orbbit Pty Limited, Wayville, South Australia 5034 (AU)
(72) Inventor: Orbbit Pty Limited, Wayville, South Australia 5034 (AU)
(74) Representative: Kraus & Lederer PartGmbB

(57) **Abstract**

A system is configured to facilitate use of digital currencies for wagering. The system includes one or more digital wallets and a management subsystem. The management subsystem is configured to receive a request to deposit digital currency from a player wallet in one of the one or more digital wallets, generate a deposit address in response to the request and transmit the deposit address, query the one or the one or more digital wallets for incoming deposits, determine that one of the incoming deposits is associated with the deposit address, and inform, via a secure connection, one or more management servers for a wagering system that a deposit has been received from a user associated with the deposit address and a value corresponding to the digital currency deposited. Related methods are also provided.

## Description

### Background

This patent is directed to facilitation of use of digital currencies in regulated industries, such as wagering or gaming, and specifically to a system and method for facilitation of the use of digital currencies with a wagering or gaming system.

Many people enjoy placing wagers on the outcome of events. The events may vary: an arrangement of symbols along a payline, an order of horses in a racing event, or a winning football team in a championship game or match. Sometimes the events will occur in real or near real time, while other times the events will be recorded. Despite differences in details of the experience, wagering occurs at locations all around the world.

While wagering itself is an activity that can be enjoyed with a minimum of equipment, the advent of electronics and computers has led to new and varied wagering and gaming experiences. For example, networked electronic gaming apparatuses now exist in most large casinos. Even outside the casinos, on-line gaming and sports wagering now exists in many places, with the wagers being placed using a variety of networked computing devices, such as personal computers, laptops, and mobile devices (e.g., cellular or mobile telephones). Any reluctance to accept electronic gaming apparatuses as operating in a fair and reliable manner appears to have disappeared at this point.

While computers permit wagering to occur over a large geographic area, wagering games typically can only be played using the locally issued governmental currency. For example, a slot machine in the US will accept US dollars (or even pennies), while a slot machine in Australia will accept Australian dollars. Similarly, wagering on football in the US occurs in US dollars, while wagering on football in Europe may occur in Euros or British pounds. It is generally not the case that a foreign currency can be used with the locally existing gaming apparatuses.

A new development in computing technology may change this generally accepted convention.

In particular, blockchain technology has given rise to digital currencies. While a comprehensive explanation of the technology will not be presented here, a blockchain is a distributed database or ledger shared among nodes of a public or a private computer network. The data in this distributed database is secured using public/private key encryption. Digital currencies (like Bitcoin and Ethereum) are built on blockchain technology, using blockchain as a means to transparently record a ledger of payments or other transactions between parties. While not backed by a specific government or group of governments, these digital currencies have become acceptable for a wide range of business transactions including the buying and selling of physical goods, and as payment for the delivery of services.

A natural convergence of the more mature computer technology that permits wagering using networked electronic gaming apparatuses or computing devices and the newer computer technology that permits digital currency to exist would appear to be coming, but remains elusive. One way in which adoption may be hindered is by the lack of computer technology to ensure compatibility while preserving reliability and security.

### Summary

According to one aspect of the present disclosure, a system configured to facilitate use of digital currencies for wagering. The system is in communication with a public network in communication a player wallet, and in communication with one or more management servers configured to account for all currency inserted into and paid out by a plurality of gaming apparatuses, each gaming apparatus of the plurality of gaming apparatuses being arranged to play a game and disposed remote to the one or more management servers. The system includes one or more digital wallets, a first security subsystem in communication with the public network, the first security subsystem configured to screen incoming traffic from the public network, a second security subsystem in communication with the public network the second security subsystem configured to permit outbound only communication with the public network, and a management subsystem in communication with the first security subsystem, with the second security subsystem, with the one or more digital wallets, and via a secure connection only with the one or more management servers. The management subsystem is configured to receive a request to deposit digital currency from the player wallet in one of the one or more digital wallets via the first security subsystem, generate a deposit address in response to the request and transmit the deposit address via the second security subsystem, query the one or the one or more digital wallets for incoming deposits, determine that one of the incoming deposits is associated with the deposit address, and inform, via the secure connection, the one or more management servers that a deposit has been received from a user associated with the deposit address and a value corresponding to the digital currency deposited.

### Brief Description of the Drawings

It is believed that the disclosure will be more fully understood from the following description taken in conjunction with the accompanying drawings. Some of the figures may have been simplified by the omission of selected elements for the purpose of more clearly showing other elements. Such omissions of elements in some figures are not necessarily indicative of the presence or absence of particular elements in any of the exemplary embodiments, except as may be explicitly delineated in the corresponding written description. None of the drawings is necessarily to scale.
Fig. 1 is a schematic view of an embodiment of a system configured to facilitate use of digital currencies shown in communication with a wagering or gaming system and a player wallet;
Fig. 2 is a flowchart illustrating an embodiment of a method of operation of the system illustrated in Fig. 1 for making deposits;
Figs. 3A to 3F are a series of simulated screen shots of a mobile device on which a user (player or patron) has their player wallet illustrating the integration of the system of Fig. 1, for example, with a wagering or gaming operator application;
Fig. 4 is a flowchart illustrating an embodiment of a method of operation of the system illustrated in Fig. 1 for making withdrawals;
Fig. 5 is a flowchart illustrating another embodiment of a method of operation of the system illustrated in Fig. 1 for making deposits;
Fig. 6 is a schematic view of another embodiment of a system configured to facilitate use of digital currencies shown in communication with a wagering system and a player wallet; and
Fig. 7 is a perspective view of an embodiment of an electric gaming machine, such as may be part of the wagering system of Figs. 1 and 6.

### Detailed Description of Various Embodiments

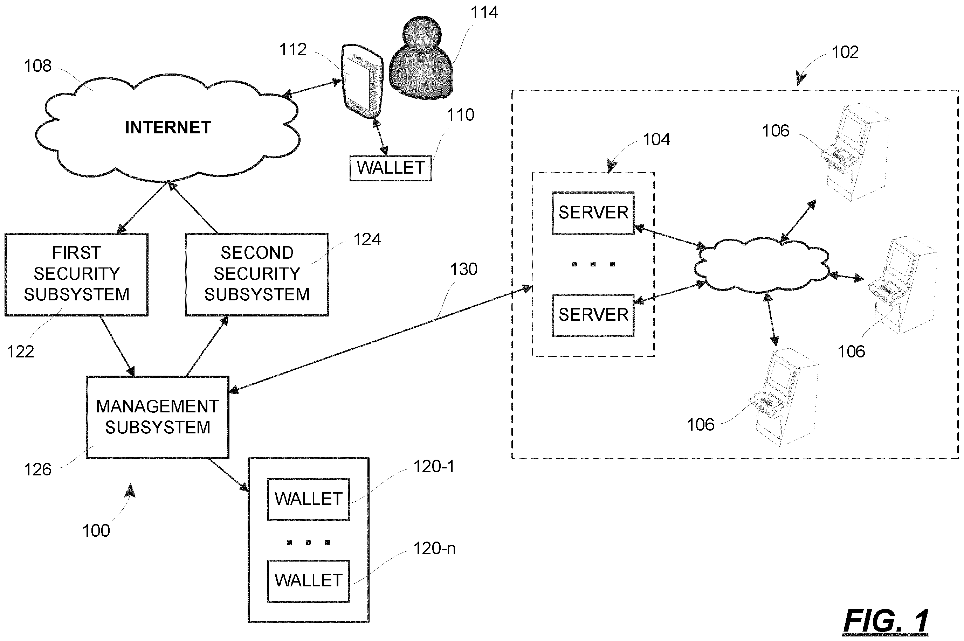

Fig. 1 illustrates a general embodiment of a system 100 configured to facilitate use of digital currencies for wagering, for example with a brick-and-mortar electronic gaming machine system (e.g., slot machines or video poker machines) or alternatively with an on-line wagering system including a system of networked computing devices. To this end, the system 100 permits a player to deposit digital currencies (e.g., Bitcoin, Ethereum) to be used in a wagering or gaming system without the operator of the electronic gaming machine system or on-line wagering system having to receive the funds in a custodial wallet.

Thus, Fig. 1 illustrates the system 100 in communication with a wagering system 102. The system 102 may include one or more management servers 104 configured to account for all currency inserted into and paid out by a plurality of networking computing devices 106, which may be referred to as wagering apparatuses (or devices) or gaming apparatuses (or devices). For example, each gaming apparatus 106 of the plurality of gaming apparatuses 106 being arranged to play a game (e.g., a slot game) and disposed remote to the one or more management servers 104. In this context, the management servers 104 are remote in the sense that they may not be in the same room as the gaming apparatuses 106, but may be disposed in the same general physical location (e.g., casino) as the gaming apparatuses. According to other embodiments, and in particular embodiments involving on-line gaming, the one or more management servers 104 may be disposed in a different city, region (e.g., state or territory), or country than the plurality of gaming apparatuses (e.g., a computing device such as a personal computer, laptop, or mobile device).

The system 100 may also be in communication with a public network 108 (e.g., the Internet) that itself is in communication a player wallet 110, which may be either a custodial wallet or a non-custodial wallet. According to one embodiment, the player wallet 110 may exist on a computing device 112 (e.g., a personal computer, a laptop, a mobile device, etc.) associated with a user 114 that wishes to use one of the gaming apparatuses 106. As illustrated in the embodiment of Fig. 1, the computing device 112 (e.g., mobile device) associated with the player wallet 110 may be separate from the gaming apparatus 106, although according to other embodiments, the computing device 112 and the gaming apparatus 106 may be the same physical or virtual device.

The system 100 is in communication with both the wagering system 102 and the player wallet 110, as illustrated in Fig. 1. Further, the system 100 includes one or more digital wallets 120 (e.g., 120-1 thru 120-n), a first security subsystem 122, a second security subsystem 124, and a management subsystem 126. While the first security subsystem 122 and the second security subsystem 124 are in communication with the public network 108, the management subsystem 126 only communicates with the public network 108 through either the first subsystem 122 or the second security subsystem 124.

In particular, the first security subsystem 122 is in communication with the public network 108, and is configured to screen incoming traffic from the public network 108. The first security subsystem 122 may also reject any cryptocurrency that has inbuilt anonymization functions that enable obfuscation of the address of the sender or the receiver, or the amount being transferred. The second security subsystem 124 is in communication with the public network 108, but the second security subsystem 124 is configured to permit outbound only communication with the public network 108. As will be seen below, the second security subsystem 124 may be configured to permit the management subsystem 126 to communicate with the public network 108, but may be configured also to permit other parts of the system 100, such as the one or more digital wallets 120-1 to 120-n, to communicate with the public network 108. This will be explained below.

The management subsystem 126 in communication with the first security subsystem 122, with the second security subsystem 124, with the one or more digital wallets 120-1 to 120-n, and via a secure connection 130 only with the system 102, and in particular the one or more management servers 104. In this context, the communication via the secure connection 130 only means that the communication with the system 102, and the one or more management servers 104, does not occur over a public network (e.g. the public network 108) but communication occurs between the management subsystem 126 and the one or more management servers 104 only via the secure connection 130.

The management subsystem 126 is configured to perform one or more actions to facilitate the use of digital currency for wagering, for example, on the system 102. These actions, like those of the first and second security subsystems 122, 124, may be carried out by one or more processors operating according to instructions stored on one or more non-volatile memory storage devices, or memories. Alternatively, the actions may be carried out by one or more electronic circuits hardwired to perform certain actions. According to other embodiments, the subsystems may be a combination of processor/memory and electronic circuits that operate to carry out the actions described below.

The management subsystem 126 may be configured (e.g., may be programmed) to direct digital currency from the player wallet 110 via the public network 108 to the one of the one or more digital wallets 120-1 to 120-n. The management subsystem 126 may monitor the deposit of the digital currency in one of the one or more digital wallets 120-1 to 120-n. The management subsystem 126 may inform or instruct, via the secure connection 130, the one or more management servers 104 that a value has been received, the value corresponding to the digital currency deposited. The management subsystem 126 also may receive an instruction to transfer payout digital currency from the one or more management servers 104 via the secure connection, the payout digital currency corresponding to a number of unplayed credits on the one of the gaming apparatuses. The management subsystem 126 may also initiate transfer of the payout digital currency to the player wallet 110 via the second security subsystem 124 and the public network 108.

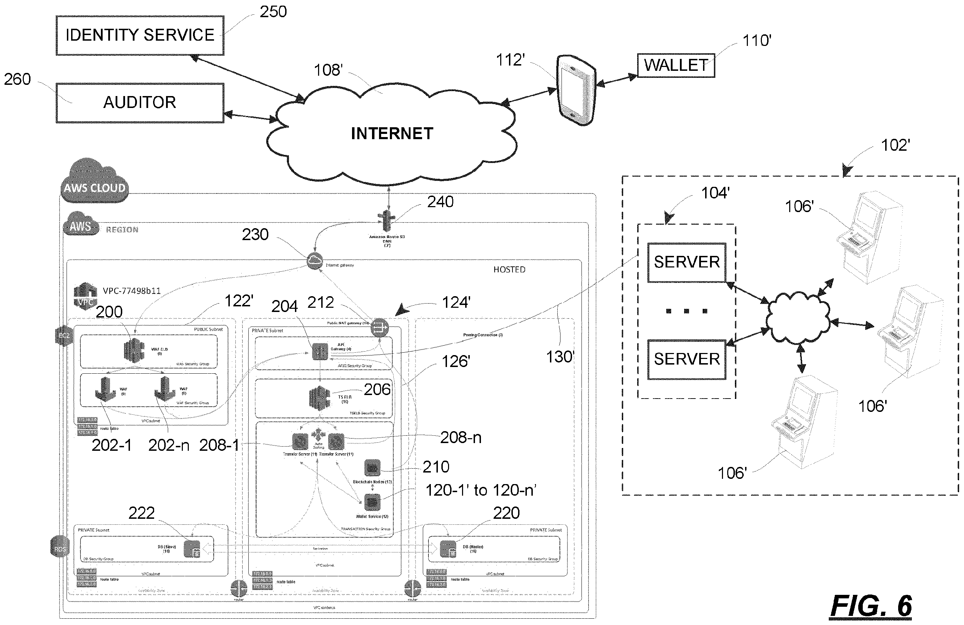

As regards the digital wallets 120-1 to 120-n, the wagering operator (e.g., casino operator) controls the keys to their respective wallet or wallets. For example, a single casino may have one wallet for each digital currency that the casino accepts, as explained in greater detail relative to the embodiment of Fig. 6. Because the wagering operator controls the keys to their wallets, the wagering operator has total and sole control over the cryptocurrency (which may also be referred to as, e.g., coins or tokens according to the type of cryptocurrency) in their wallet(s). The operator of the system 100 does not store any wallet keys, and would therefore be unable to or restricted from accessing the wallets 120-1 to 120-n. The wallets 120-1 to 120-n thus may be referred to as non-custodial wallets.

While the digital wallets 120-1 to 120-n may be hosted by the operator of system 100 (see the embodiment of Fig. 6, below), the digital wallets 120-1 to 120-n may be part of the system 100 while hosted by a separate party as well. For example, the wallets 120-1 to 120-n may be hosted by third party service (e.g., an exchange or third party wallet provider, like Ledger or TrustWallet) at the option of the operator of the system 100 or at the option of the operator of the system 102. The wallets 120-1 to 120-n may even be hosted by the operator of the system 102, as opposed to the operator of the system 100, in a different environment (other than the system 102). Reference to hosting by a separate party is thus with reference to the operator of the system 100, and may include both a third party service provider or the operator of the system 102. The management subsystem 126 may communicate with the separately hosted wallets 120-1 to 120-n via an application programming interface or some other data access/sharing arrangement, or by querying the public blockchain data to determine when a deposit is made or the user has been credited for the amount.

If the wallets 120-1 to 120-n are hosted separately, the communication of the system may be altered somewhat in that it may be necessary to route communications with the wallet service through the first and second security subsystems 122, 124.

The system 100 may securely generate deposit addresses for each user (player or patron), even though the wagering or gaming operator retains control over their wallet(s) 120-1 to 120-n. The deposit addresses are requested by and delivered to the user/player/patron by the management subsystem 126 of the system 100.

While the system 100 may securely generate deposit address for each user, the coins or tokens for all players of a particular type of cryptocurrency are deposited in one of the wallets 120-1 to 120-n assigned to a particular wagering or gaming operator. The management subsystem 126 would establish an entry in a database for a value of a particular player's coins or tokens, the entry associated with the players securely generated deposit address. The management subsystem 126 would also store in the database additional deposits, withdrawal, and play (both increases and decreases) for each player. The management subsystem 126 may also store any transaction fees which may be incurred by a user/player/patron, whether on deposit or withdrawal, so that the player can identify these fees.

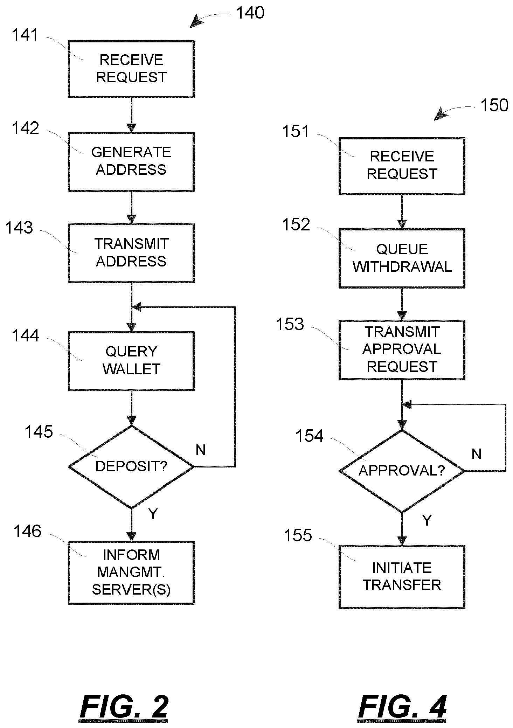

Fig. 2 illustrates a method 140 of operating the system 100 to permit a player to make a deposit for use with the wagering or gaming system 102 via the system 100.

The method 140 begins with the system 100 receiving a request from a user 114 (via the player device 112) to make a deposit at block 141. This request would be received via the first security subsystem 122 and passed to the management subsystem 126, if expected. The management subsystem 126 then generates a deposit address associated with one of the one or more wallets 120-1 to 120-n at block 142, and transmits the address via the second security subsystem 124 to the player device 112 at block 143. It will be recognized that the actions of blocks 142, 143 may be combined into a single action according to other embodiments.

Once the player has received the deposit address, the player may use the deposit address to deposit funds to that deposit address. This is done by the user/player from within the wallet 110. The wallet 110 uses the public network 108 (e.g., the Internet) to move the funds on the relevant blockchain. Once moved on the blockchain, the funds will be seen to be in one of the one or more wallets 120-1 to 120-n, in accordance with the deposit address.

The method 140 continues at block 144 where the management subsystem 126 queries the one of the one or more wallets 120-1 to 120-n. In particular, the management subsystem 126 queries the wallet to determine if a deposit has been made associated with the deposit address generated (block 145). If the management subsystem 126 determines that a deposit associated with the deposit address has been made, then the management subsystem 126 informs the one or more management servers 104 at block 146. If the management subsystem 126 determines that no deposit has been received associated with the deposit address, the management subsystem 126 continues to monitor the wallet.

It will be recognized that the management subsystem 126 performs the method 140 with respect to each request to make a deposit. As such, the management subsystem 126 will be receiving a plurality of requests for most systems 100, 102, and will be monitoring a plurality of wallets in regard to the deposit addresses generated. As such, the system 100, and in particular the management subsystem 126, may be performing many instances of the method 140 at the same time.

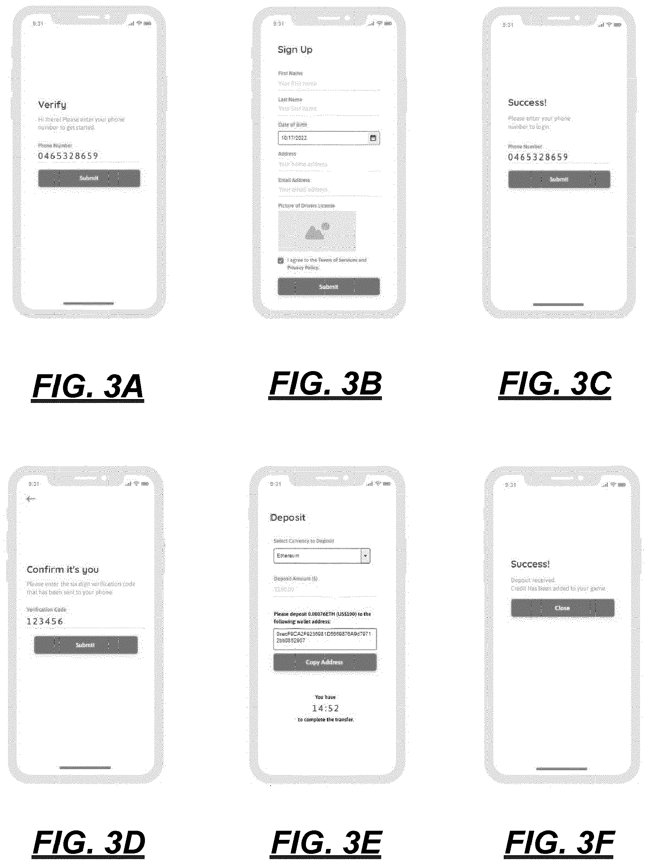

The system 100 can be integrated with an existing cashless gaming system operating on the one or more management servers 104 located, for example, in a casino property. Moreover, the system 100 can be integrated with an existing or newly designed application of the wagering or gaming operator, such that messages can be sent from the wagering or gaming operator application to the system 100 to transfer cryptocurrency from the player wallet 110 to one of the one or more wallets 120-1 to 120-n. Figs. 3A to 3F illustrate how such an integration may appear to the user/player/patron.

Figs. 3A to 3C illustrate simulated screen shots of a first-time login to a player account (registration), using the player cellular telephone number (or mobile device, for short) as the player account identifier. As such, in Fig. 3A, the application causes the mobile device to display a request for the player account identifier, and to transmit this to the wagering or gaming operator (or their representative) upon user input received by the graphical user interface. In Fig. 3B, the application may display a request for additional personal information, including name, address, email address, and a picture of a government issue identification card (e.g., a driver's license), and again transmit this upon a further input. Fig. 3C illustrates a completion screen that may be displayed to the user upon successful transmission of the registration process.

During a subsequent login, the application may cause the mobile device to display a request for a verification code as is illustrated in Fig. 3D, which verification code may be provided as a communication (e.g., SMS text message) to the mobile device. Alternatively, the verification code may be generated by a verification application, or by other methods. As illustrated in Fig. 3E, after receipt and confirmation of the verification code from the user, the user may be prompted to prepare a deposit request, which deposit request is to be transmitted to the system 100.

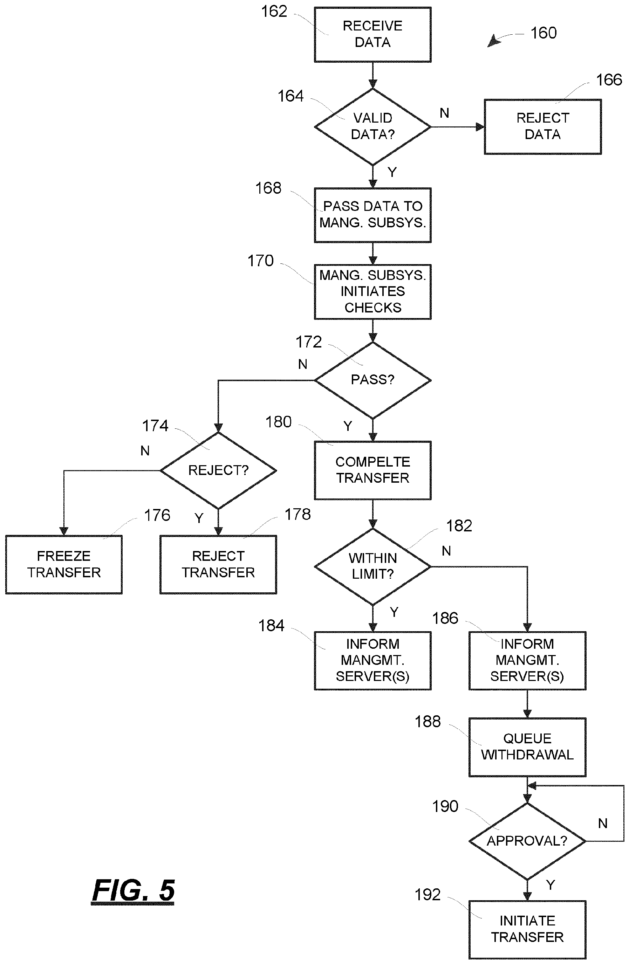

As illustrated in Fig. 3E, the graphical user interface may prompt the player to select the digital currency to be transferred from the player wallet 110 to one of the wallets 120-1 to 120-n of the wagering or gaming operator. The player may also be prompted to enter the amount of the deposit. While certain embodiments may determine if the amount of the deposit exceeds a deposit limit as part of the deposit process (see Fig. 5, blocks 186 to 192), it is also possible to limit the deposit amount within the application itself. The graphical user interface may also display the deposit address for the operator wallet. Upon receipt of a user input, the mobile device may send this deposit request to the system 100.

Assuming that the player makes a deposit, then the wagering or gaming system operator may cause the display of the screen illustrated in Fig. 3F. At this point, the cryptocurrency has been deposited in one of the wallets 120-1 to 120-n, and the one or more management servers 104 have been informed of this fact and the value of the digital currency received. The one or more management servers 104 may then address the value of the digital currency in the same manner that the existing cashless gaming system operating on the one or more management servers 104 would ordinarily handle such value in government issued currency.

The system 110 may also operate to facilitate a withdrawal of funds from the one or the one or more wallets 120-1 to 120-n to the player wallet 110. The withdrawal may include a refund or return of funds to the player 114. The withdrawal may also include a payout of digital currency corresponding to a number of unplayed credits on the one of the gaming apparatuses, which unplayed credits may have been issued to the user/player for digital currency initially deposited, may have been deposited by the user/player in government issued currency in an electronic gaming machine, or may have been awarded to the user/player during a wagering or gaming event (e.g., a play of one or more paylines during a slots or video poker game).

An embodiment of such a method 150 of facilitating a withdrawal of funds is illustrated in Fig. 4.

The method 150 starts upon receipt of a request to make a withdrawal of cryptocurrency from the one or the one or more wallets 120-1 to 120-n to the player wallet 110 at block 151. The system 100, and in particular the management subsystem 126, then queues the withdrawal (a transfer) at block 152, and transmits an approval request to the wagering or gaming operator (e.g., to the one or more management servers 104 via the secure connection 130). According to other embodiments, the actions of blocks 152, 153 may be combined into a single action.

According to the illustrated embodiment, the system 100 then waits to receive approval of the transfer from the wagering or gaming operator at block 154. Until the approval is received, the method 150 continues to wait. When the system 100 determines that the approval has been received, the system 100 initiates the transfer from the one of the one or more wallets 120-1 to 120-n to the player wallet 110. The system 100 is not capable of making the transfer without operator approval because the wallets 120-1 to 120-n remain under the control of the wagering or gaming system operator.

According to an alternate embodiment, the system 100 may only perform the actions of blocks 151, 152, 153, and the wagering or gaming system operator may initiate the funds transfer to the player wallet 110 from the one of the one or more wallets 120-1 to 120-n as a separate action. That is, the actions of blocks 154, 155 may not be automated. This form of manual transfer is possible because the operator maintains control over the wallets 120-1 to 120-n. In either event, the funds move to the player via the public network 108 on the relevant blockchain.

It will be recognized that the methods 140, 150 illustrated in Figs. 2 and 4 are only embodiments of methods of operating the system 100 to receive deposits from users/players/patrons or to withdraw funds from the wallets 120-1 to 120-n, and that other embodiments are possible. As a further example, the system 100 may operate according to a further embodiment of the method 160 illustrated in Fig. 5 when receiving a deposit.

The method 160 begins with the receipt of data by the first security subsystem 122 at block 162. The first security subsystem 122 determines if the data traffic is unexpected at block 164, and rejects the data if it is determined to be unexpected at block 166. If the data is acceptable, the first security subsystem 122 passes the data to the management subsystem 126 at block 168.

Upon receipt of the data (a cryptocurrency deposit), the management subsystem 126 initiates one or more checks on the incoming data at block 170. For example, the management subsystem 126 may initiate a check of the identity of the player making the cryptocurrency request with a third-party identity service. In doing so, the management subsystem 126 may send the request to the third-party service via the second security subsystem 124, and may receive a response via the first security subsystem 122. The management subsystem 126 may also query the blockchain associated with the cryptocurrency to determine if the deposit is valid. Upon receipt of the response(s), the management subsystem 126 may make a determination whether the checks have been passed at block 172.

If the management subsystem 126 determines that one or more of the checks have not been passed at block 172, the method 160 passes to block 174 where the management subsystem 126 determines if the transfer/deposit should be rejected. If the management subsystem 126 determines that the check has not been passed, but the deposit should not be rejected, then the method 160 passes to block 176 and the cryptocurrency that is the subject of the deposit request is frozen. If the management subsystem 126 determines that the check has not been passed and the deposit should be rejected, then the method 160 passes to block 178 and the deposit is rejected. In either case, the management subsystem 126 may send a communication to the one or more management servers 104 to alert the wagering or gaming operator, and may also report the user 114 to the appropriate authorities.

On the other hand, if the management subsystem 126 determines that all checks have been passed at block 172, the method 160 passes to block 180 and the cryptocurrency is treated as deposited into one of the wallets 120-1 to 120-n according to the wagering operator and cryptocurrency type indicated by the user/player. According to certain embodiments of the method 160, the management subsystem 126 may make a further determination if a deposit limit has been exceeded, or if the deposit is within the deposit limit. Deposit limits may exist as to individual player accounts, or on all players cryptocurrency in a particular wallet 120-1 to 120-n. This determination is made at block 182.

If the determination is made that the deposit limit has not been exceeded, then the method 160 passes to block 184, and the management subsystem 126 sends a message to the one or more management servers 104 via the secure connection 130 as to a value of the cryptocurrency received. This value may be in terms of the cryptocurrency, or alternatively the value may be in terms of a government issued currency. Certain embodiments may provide only in terms of one of the two options, or may provide in different terms entirely. In addition, if no determination is made at block 182 (because there is no deposit limit, for example), then the method 160 may pass from block 180 directly to block 184.

If the determination is made that the deposit limit has been exceeded, then the method 160 proceeds with the actions of blocks 186 to 192 to issue a return of the amount of cryptocurrency in excess of the deposit limit. As such, the management subsystem 126 informs the one or more management servers 104 of the value of the deposit, up to the deposit limit, at block 186. The management subsystem 126 also queues a transfer of the cryptocurrency in excess of the deposit limit a block 188. Because the management subsystem 126 does not have the ability to access the wallets 120-1 to 120-n, the management subsystem 126 must wait for a representative of the wagering or gaming system operator to initiate the return transfer, which it does at block 190.

In this regard, the wagering or gaming operator would be responsible for assigning this responsibility to one or more of its employees. For example, an accounts team member might have permission to initiate a transfer from one of the wallets 120-1 to 120-n, and a senior accounts team member (e.g., a team manager) may have the responsibility to approve the transfer before the transfer can be completed. The system 100 in the illustrated embodiment does not include any cryptocurrency exchange services to buy, sell, or swap cryptocurrencies.

Once the representative of the wagering or gaming system operator approves the transfer, the management subsystem 126 transmits the information via the second security subsystem 124 via the public system 108 at block 192.

The system 100 thus provides a middleware solution for securely facilitating cryptocurrency transactions in a wagering environment, such as a casino environment. More particularly, the system 100 allows for, e.g., the casino's existing customer-facing cashless applications and backend management system to be integrated with cryptocurrency transactions. In fact, given the nature of the solution proposed, the system 100 is system/technology stack agnostic.

Further, the system 100 provides a secure transfer of all transactional data to the wagering system (e.g., casino) operator for secure data storage by the one or more management servers 104. This secure transfer of data permits the casino and backend system manufacturer to meet their financial reporting requirements. At the same time, a copy of all transactional data is stored in the system 100 (perhaps in redundant databases, see below) for audit, compliance, and financial reporting purposes.

Having thus described the system 100 and the methods 140, 150, 160 with respect to a general embodiment relative to Figs. 1-4, a further detailed embodiment now may be discussed relative to Fig. 6. In this regard, the features of the system 100' illustrated in Fig. 6 that are common with the general embodiment of Fig. 1 are indicated with a prime (e.g., system 100'), while additional features are referenced with new reference numerals.

In common with the embodiment of Fig. 1, the embodiment of Fig. 6 includes a wagering system 102' with one or more management servers 104' and one or more wagering or gaming apparatuses 106'. Also included is a public network 108' in communication with a player device 112' with player wallet 110'.

Also included are a first security subsystem 122', a second security subsystem 124', and a management system 126'. The first and second security subsystems 122', 124' and the management system 126' each include one or more devices or services that cooperate to provide the feature for which the subsystem is configured to provide. That is, while the subsystems 122', 124', 126' may include hardware and software, in the form of one or more gateways, balancers, servers, etc., the subsystems 122', 124', 126' may include instead one or more serverless functions (e.g., Amazon Web Services (AWS) Lambda Functions) in place of the servers, for example. Some of these opportunities for substitution will be noted below.

According to the illustrated embodiment the first security subsystem 122', the second security subsystem 124', and the management subsystem 126' are hosted on a network separate and remote to the one or more management servers 104'. According to such an embodiment, the first security subsystem 122' may include a public subnet, the management subsystem 126' may include a private subnet, and the second security subsystem 124' may be a public network address translation gateway in communication with the management system 126' and the public network 108'. Other combinations of devices and processes are possible according to other embodiments.

Starting then with the first security subsystem 122', as illustrated this subsystem 122' may include a load balancer 200. The load balancer 200 may be a web application firewall elastic load balancer according to one embodiment. The load balancer 200 communicates with the public network 108' and the remaining elements of the subsystem 122'. The load balancer 200 is configured to distribute incoming application traffic to balance the loads, so as to ensure a higher level of infrastructure redundancy/fallover.

In communication then with the balancer 200 is one or more web application firewalls 202-1 to 202-n. While a plurality of web application firewalls (202-1 to 202-n) are illustrated in Fig. 6, an embodiment of the disclosure could include a single firewall (in which case the load balancer would not need to be included). The firewalls 202-1 to 202-n scan the incoming data to identify any unexpected traffic. The balancer 200 thus balances the load of the incoming application traffic among the firewalls 202-1 to 202-n. After the firewalls 202-1 to 202-n clear the incoming application traffic, the data is passed to the management subsystem 126', and in particular an application programming interface (API) gateway 204.

The API gateway 204 is configured to accept API calls, to aggregate the various services required to fulfill them, and to return the appropriate result. The gateway 204 receives incoming data traffic via the firewalls 202-1 to 202-n, but is in communication with other devices or processes as well.

For example, the gateway 204 is in secure communication with the one or more management servers 104' of the wagering system 102' to receive incoming traffic. The secure communication may be provided by a peering connection 130' between the one or more management servers 104' and the gateway 204. The peering connection 130' avoids connecting the one or more management servers 104' to the public network 108', with its attendant security risks. Instead, the one or more management servers 104' communicate securely (and non-publicly) with the management subsystem 126', and in particular the gateway 204, of the system 100'.

In addition, the gateway 204 is in communication with a further load balancer 206 and one or more transfer servers 208-1 to 208-n. Data traffic flows both from the gateway 204 to the one or more transfer servers 208-1 to 208-n via the load balancer 206, and from the one or more transfer servers 208-1 to 208-n to the gateway 204. The load balancer 206 (or transfer server load balancer, which may be an elastic load balancer) distributes incoming data traffic from the gateway 204 to the transfer servers 208-1 to 208-n to provide a suitable level of infrastructure redundancy/fallover.

The one or more transfer servers 208-1 to 208-n are in communication with the gateway 204 (via the balancer 206) and the one or more digital wallets 120-1' to 120-n'. Requests received via the gateway 204 are serviced from the transfer servers 208-1 to 208-n. A plurality of transfer servers 208-1 to 208-n may be operational to provide suitable redundancy/fallover. Alternatively, the operations of the transfer server may be hosted as serverless functions (e.g., AWS Lamba Functions). If hosted as serverless functions, the balancer 206 may not be required.

The one or more transfer servers 208-1 to 208-n are configured to deposit the digital currency data from the player to the one or more digital wallets 120-1' to 120-n', and to transfer payout digital currency data from the wagering or gaming operator to the player wallet 110' via the gateway 204 and the second security subsystem 124'. In the event that the wagering or gaming operator nominates to support multiple cryptocurrencies, a central wallet would be created for each blockchain for the particular wagering or gaming operator. According to one embodiment, an Ethereum wallet may be used to store all Ethereum-based tokens and coins (Ethereum, USDT ERC20, USDC ERC20) while a Bitcoin wallet may be used to store deposited Bitcoin. In particular, the one or more transfer servers 208-1 to 208-n may carry out the actions described in Fig. 5, method 160, including those of blocks 170, 182, 184, and 186, 188, and 192.

Two-way communication is provided between the one or more transfer servers 208-1 to 208-n and the one or more digital wallets 120-1' to 120-n'. The one or more digital wallets 120-1' to 120-n' also are in communication with one or more blockchain nodes 210. According to the disclosed embodiments, a blockchain node 210 may be hosted for each supported currency. The blockchain nodes 210 part of the management subsystem 126' are believed to provide a suitable level of privacy and security, distributed control, and sovereignty.

The gateway 204 and the blockchain nodes 210 are both in communication with the second security subsystem, which includes a gateway 212. The gateway 212 may be a network address translation (NAT) gateway, for example. The gateway 212 permits the gateway 204 to return data to applications that need to connect to and use the management subsystem 126' via the public network 108' (e.g., a mobile-based casino companion application). The gateway 212 also permits the blockchain nodes 210 to establish a secure connection for the purpose of synchronizing with their respective networks.

Importantly, the gateway 212 is not used for certain communications. For example, the gateway 212 is not used to communicate with the one or more management servers 104' of the system 102'. The communication with the one or more management servers 104' is conducted using the peering connection 130' instead. Further, the gateway 212 is not configured to accept inbound communication requests. All communications with the public network 108' via the gateway 212 must be initiated from within the system 100' (and as illustrated via the gateway 204).

The embodiment illustrated in Fig. 6 includes additional devices not mentioned in the embodiment of Fig. 1 to simplify the presentation thereof. These additional devices may be present in combination with the embodiment of Fig. 1 as well.

For example, the embodiment of Fig. 6 includes one or more backup databases 220, 222, which databases may be (preferably are) encrypted. The one or more backup databases 220, 222 are in communication with the one or more transfer servers 208-1 to 208-n and configured to replicate the one or more transfer servers 208-1 to 208-n. As such, all transaction and user data may be stored in the backup databases 220, 222. According to the illustrated embodiment, the backup databases may be established on their own private subnets, and may be configured with one server (e.g., server 220) controls the other server (e.g., server 222), with the server 220 being referred to as the primary server and the server 222 being referred to as the secondary server.

In addition, while the system 100' has been described as in communication with the network 108', there may exist one or more devices or processes between the system 100' and the network 108'. As illustrated, the public network 108' may be connected to the first security subsystem 122' and the second security subsystem 124' by an internet gateway 230 and a domain name system (DNS) web service 240. Where the system 100' is hosted on the AWS Clous, the DNS web service may be the Amazon Route 53 DNS web service.

Also existing remotely from the system 100', but accessible via the public network 108', is one or more third-party devices or processes. As illustrated in Fig. 6, the management subsystem 126' may be configured to access identity verification information from a third-party server 250 via the second security subsystem 124' and the public network 108'. In addition, the management subsystem 126' may be configured to be accessed by an auditor service 260 via the public network 108' and the first security subsystem 122'.

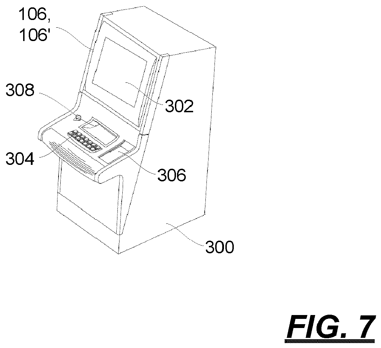

Fig. 7 illustrates an embodiment of an electronic gaming machine, as illustrated in Figs. 1 and 6. The intent is not to limit the present application to only such a gaming machine, because according to other embodiments other electronic gaming machines or even computing devices (e.g., personal computers, laptops, tablets, etc.) may be used instead. The inclusion of this embodiment is by way of example, and not by way of limitation.

As such, the one or more electronic gaming machines 106, 106' include a cabinet 300 in which is disposed or mounted a controller. The controller may be defined by one or more electrical circuit components, may be defined by one or more processors that operate to perform the actions of the controller, or in part by electrical circuit components and in part by a processor(s) that operate to perform the actions of the controller. The instructions, or programs, may be stored on a memory associated with the processor, which memory may include one or more tangible non-transitory computer readable memories, having computer executable instructions stored thereon, which when executed by the processor, may cause the one or more processors to carry out one or more actions.

The controller may be coupled to and in communication with one or more displays 302, one or more input devices 304, one or more wager acceptors 306 (which may be used in addition to the system 100 described above) and one or more award payout devices 308. The one of more input devices 304 may be in the form of one or more buttons, or may be in the form of a touch screen that is used in association with the display 302. Further, the wager acceptor 306 may be in the form of a coin acceptor, a paper currency (or bill) acceptor, and a ticket reader and/or printer. The ticket printer may also define an award payout device 308. The controller may be coupled to the display(s) 302, input device(s) 304, wager acceptor(s) 306, and payout device(s) 308 via a common bus, or the controller may be connected to each separately or through separate buses.

Although the preceding text sets forth a detailed description of different embodiments of the invention, it should be understood that the legal scope of the invention is defined by the words of the claims set forth at the end of this patent. The detailed description is to be construed as exemplary only and does not describe every possible embodiment of the invention since describing every possible embodiment would be impractical, if not impossible. Numerous alternative embodiments could be implemented, using either current technology or technology developed after the filing date of this patent, which would still fall within the scope of the claims defining the invention.

It should also be understood that, unless a term is expressly defined in this patent using the sentence "As used herein, the term ` ' is hereby defined to mean..." or a similar sentence, there is no intent to limit the meaning of that term, either expressly or by implication, beyond its plain or ordinary meaning, and such term should not be interpreted to be limited in scope based on any statement made in any section of this patent (other than the language of the claims). To the extent that any term recited in the claims at the end of this patent is referred to in this patent in a manner consistent with a single meaning, that is done for sake of clarity only so as to not confuse the reader, and it is not intended that such claim term be limited, by implication or otherwise, to that single meaning. Finally, unless a claim element is defined by reciting the word "means" and a function without the recital of any structure, it is not intended that the scope of any claim element be interpreted based on the application of 35 U.S.C. §112(f).

## Claims

1. A system configured to facilitate use of digital currencies for wagering, the system in communication with a public network in communication a player wallet and in communication with one or more management servers configured to account for all currency inserted into and paid out by a plurality of gaming apparatuses, each gaming apparatus of the plurality of gaming apparatuses being arranged to play a game and disposed remote to the one or more management servers, and the system comprising:
one or more digital wallets;
a first security subsystem in communication with the public network, the first security subsystem configured to screen incoming traffic from the public network;
a second security subsystem in communication with the public network the second security subsystem configured to permit outbound only communication with the public network; and
a management subsystem in communication with the first security subsystem, with the second security subsystem, with the one or more digital wallets, and via a secure connection only with the one or more management servers,
the management subsystem configured to:
receive a request to deposit digital currency from the player wallet in one of the one or more digital wallets via the first security subsystem;
generate a deposit address in response to the request and transmit the deposit address via the second security subsystem;
query the one or the one or more digital wallets for incoming deposits;
determine that one of the incoming deposits is associated with the deposit address; and
inform, via the secure connection, the one or more management servers that a deposit has been received from a user associated with the deposit address and a value corresponding to the digital currency deposited.

2. The system of claim 1, wherein the management subsystem is further configured to:
receive an instruction to queue a deposit of digital currency from one of the one or more wallets to the player wallet, the instruction received from one of the one or more management servers via the secure connection, and digital currency corresponding to a number of unplayed credits on the one of the gaming apparatuses;
queue a withdrawal from the one of the one or more wallets for operator approval and transmit an approval request to the one or more management servers via the secure connection;
receive operator approval; and
initiate transfer from the one or the one or more wallets.

3. The system of claim 1, wherein the management subsystem is further configured to:
receive an instruction to queue a deposit of digital currency from one of the one or more wallets to the player wallet, the instruction received from one of the one or more management servers via the secure connection, and digital currency corresponding to a number of unplayed credits on the one of the gaming apparatuses; and
queue a withdrawal from the one of the one or more wallets for operator approval.

4. The system of any one of claims 1 to 3, wherein the one or more digital wallets are hosted separately from the first security subsystem, the second security subsystem, and the management subsystem.

5. The system of any one of claims 1 to 4, wherein the first security subsystem comprises one or more web application firewalls.

6. The system of claim 5, wherein the one or more web application firewalls comprises a plurality of web application firewalls, and the first security subsystem comprises a load balancer, the load balancer coupled to the plurality of web application firewalls.

7. The system of any one of claims 1 to 6, wherein the second security subsystem comprises a network address translation gateway.

8. The system of any one of claims 1 to 7, wherein the management subsystem comprises:
a gateway in communication with the first security subsystem, with the second security subsystem, and via the secure connection only with the one or more management servers
one or more transfer servers in communication with the gateway and the one or more digital wallets,
the one or more transfer servers configured to deposit the digital currency from the player wallet in the one or more digital wallets, and to send payout digital currency to the player wallet via the gateway and the second security subsystem.

9. The system of claim 8, wherein the one or more transfer servers comprises a plurality of transfer servers, and the management subsystem further comprises a load balancer coupled to the gateway and the plurality of transfer servers.

10. The system of claim 8 or 9, further comprising one or more backup databases, the one or more backup databases in communication with the one or more transfer servers and configured to replicate the one or more transfer servers.

11. The system of claim 10, wherein the one or more backup databases comprises a primary database and a secondary database.

12. The system of any one of claims 1 to 11, further comprising a plurality of blockchain nodes in communication with the one or more wallets and the second security subsystem.

13. The system of any one of claims 1 to 12, wherein the management subsystem is configured to access identity verification information from a third-party server via the second security subsystem and the public network.

14. The system of any one of claims 1 to 13, wherein the management subsystem is configured to be accessed by an auditor service via the public network and the first security subsystem.

15. The system of any of claims 1 to 14, wherein:
the first security subsystem, the second security subsystem, and the management subsystem are hosted on a network separate and remote to the one or more management servers, and
the first security subsystem comprises a public subnet, the management subsystem comprises a private subnet including a gateway in communication with the public subnet, and the second security subsystem comprises a public network address translation gateway in communication with the gateway and the public network.
